# EUROPÄISCHE PATENTSCHRIFT

(11) **EP 1 388 455 B1**
(45) Veröffentlichungstag und Bekanntmachung des Hinweises auf die Patenterteilung: **22.03.2006**
(21) Anmeldenummer: 03102438.3
(22) Anmeldetag: 06.08.2003
(51) Int. Cl.: B60K 26/02, G05G 1/14

(54) **Pedalvorrichtung eines Kraftfahrzeugs**
Pedal apparatus for vehicles
Ensemble pédale pour automobile

(30) Priorität: 08.08.2002 DE 10236358
(43) Veröffentlichungstag der Anmeldung: 11.02.2004
(73) Patentinhaber: Hella KGaA Hueck & Co., 59552 Lippstadt (DE)
(72) Erfinder: Kuhn, Lothar, 59556 Lippstadt (DE); Ridder, Ralf, 32816 Schiederr-Schwalenberg (DE); Berns, Jörg, 58675 Hemer (DE)

(56) Entgegenhaltungen:
- DE-C- 4 407 005
- DE-U- 29 519 852
- GB-A- 2 295 352
- US-A- 5 666 860

## Beschreibung

Die vorliegende Erfindung betrifft eine Pedalvorrichtung eines Kraftfahrzeugs umfassend eine Pedalplatte, auf die seitens eines Benutzers Kraft ausgeübt werden kann, eine Gehäuseeinheit, an der die Pedalplatte gelenkig befestigt ist, ein Verbindungselement, das mit Kraftübertragungsmitteln im Innern der Gehäuseeinheit verbunden ist und außerhalb der Gehäuseeinheit mit der Pedalplatte verbunden ist.

Pedalvorrichtungen der vorgenannten Art sind hinlänglich bekannt. Es kann sich bei dem dabei gebildeten Pedal beispielsweise um das Gaspedal eines Kraftfahrzeugs handeln. Die von dem Benutzer ausgeübte Kraft muss über die Kraftübertragungsmittel auf weitere Teile der Pedalvorrichtung übertragen werden. Beispielsweise kann es sich dabei um federabgestützte Teile handeln, deren Bewegung von einem Sensor erfasst werden kann. Die Kraftübertragungsmittel sind in der Regel im Stand der Technik als Gliederketten ausgeführt. Beispielsweise kann hierbei das vorgenannte Verbindungselement das letzte Element einer derartigen Gliederkette sein.

Als problematisch bei dem vorgenannten Stand der Technik erweist sich, dass eine automatische Montage der Pedalplatte an der Gehäuseeinheit der Pedalvorrichtung nur unter Schwierigkeiten durchführbar ist. Bei dieser automatischen Montage wird nämlich die Gliederkette von der Pedalplatte verdeckt, wobei gleichzeitig sichergestellt werden muss, dass das Verbindungselement sicher mit der Pedalplatte verbunden, beispielsweise verrastet wird. Bei dem Stand der Technik kann das lose Ende des Verbindungselementes eine beliebige Position einnehmen. Gleichzeitig kann aber bei der automatischen Montage der Pedalplatte eine Verbindung, insbesondere eine Verrastung nur dann erfolgen, wenn das Verbindungselement zum Zeitpunkt der Montage der Pedalplatte eine bestimmte Position einnimmt.

Aus der DE 44 07 005 C1 ist eine Fahrpedaleinrichtung zum Einstellen der Fahrgeschwindigkeit eines Fahrzeuges bekannt, bei der eine Pedalplatte, auf die ein Benutzer eine Kraft ausüben kann, mit einer Gehäuseeinheit verbunden ist. Zur Kraftübertragung ist ein Verbindungselement in Form eine Betätigungsstange vorgesehen, die zwischen der Pedalplatte und der Gehäuseeinheit angeordnet ist.

Das der vorliegenden Erfindung zugrundeliegende Problem ist somit die Schaffung einer Pedalvorrichtung der eingangs genannten Art, bei der die Pedalplatte vergleichsweise problemlos automatisch an der Gehäuseeinheit montierbar ist.

Diese wird erfindungsgemäß dadurch erreicht, dass an dem Verbindungselement oder der Gehäuseeinheit ein Führungsteil angebracht ist, und dass in der Gehäuseeinheit oder in dem Verbindungselement eine Ausnehmung vorgesehen ist, in die das Führungsteil eingreift, wodurch die Herstellung der Verbindung des Verbindungselementes mit der Pedalplatte erleichtert wird. Durch das Führungsteil, das in die entsprechende Ausnehmung an der Gehäuseeinheit eingreifen kann, wird gewährleistet, dass zum Zeitpunkt der automatischen Montage der Pedalplatte das Verbindungselement in der für die Verbindung mit der Pedalplatte vorbestimmten Position ist. Dadurch wird die automatische Montage der Pedalplatte ermöglicht.

Insbesondere kann hierbei die Verbindung zwischen Pedalplatte und Verbindungselement als Rastverbindung ausgeführt sein. Dazu kann an der Unterseite der Pedalplatte eine Rastaufnahme angeordnet sein, in die ein in dem Verbindungselement angeordnetes Rastelement eingreifen kann. Vorteilhafterweise können zusätzlich an der Rastaufnahme sich von dieser und voneinander wegerstreckende Führungsrippen angeordnet sein, die ein Einbringen des Rastelementes in die Rastaufnahme erleichtern. Auf diese Weise wird eine Vorfügung des Verbindungselementes bewirkt, so dass der Einrastvorgang problemlos erfolgen kann.

Erfindungsgemäß kann vorgesehen sein, dass in der Gehäuseeinheit ein Führungskanal ausgebildet ist, in dem die Kraftübertragungsmittel verlaufen. Hierbei kann die Ausnehmung für die Aufnahme des Führungsteils im Bereich des oberen Endes des Führungskanals angeordnet sein. Durch diese Anordnung der Ausnehmung wird die Positionierung des Verbindungselementes erleichtert.

Gemäß einer bevorzugten Ausführungsform der vorliegenden Erfindung kann das Führungsteil eine nocken- oder nasenförmige Gestalt aufweisen. Durch eine derartige Gestaltung kann bei entsprechender Ausnehmung mit einfachen baulichen Mitteln eine vergleichsweise sichere Positionierung des Verbindungselementes erzielt werden.

Insbesondere kann das Führungsteil seitlich an dem Verbindungselement angebracht sein. Auf diese Weise wird gewährleistet, dass das Verbindungselement in die Öffnung des Führungskanals einschiebbar ist bei Druck des Benutzers auf die Pedalplatte, wobei das seitlich angebrachte Führungsteil das Einschieben des Verbindungselementes in den Führungskanal nicht behindert.

Erfindungsgemäß kann weiterhin vorgesehen sein, dass das Führungsteil im Bereich des von dem Rastelement abgewandten Drittels, insbesondere im Bereich des von dem Rastelement abgewandten Endes des Verbindungselementes angeordnet ist. Auf diese Weise ragt noch ein beträchtlicher Teil des Verbindungselementes aus der Gehäuseeinheit heraus, so dass der Rastvorgang nicht durch die Anordnung des Führungsteils an dem Führungskanal behindert wird.

Wie bei dem Stand der Technik können auch bei der Erfindung die Kraftübertragungsmittel als Gliederkette ausgebildet sein, wobei das Verbindungselement gelenkig mit einem der Glieder der Kraftübertragungsmittel verbunden ist. Auf diese Weise kann beispielsweise das Verbindungselement das pedalplattenseitig letzte Element der Gliederkette darstellen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer erfindungsgemäßen Pedalvorrichtung ohne Pedalplatte;
- Fig. 2: eine Fig. 1 entsprechende geschnittene Darstellung der erfindungsgemäßen Pedalvorrichtung mit aufgebrachter Pedalplatte;
- Fig. 3a: eine Seitenansicht eines Verbindungselementes mit daran angebrachten Kraftübertragungsmitteln der erfindungsgemäßen Pedalvorrichtung;
- Fig. 3b: eine Ansicht gemäß dem Pfeil III b in Fig. 3a;
- Fig. 4: eine der Darstellung gemäß Fig. 1 entsprechende Detailansicht der Gehäuseeinheit der erfindungsgemäßen Pedalvorrichtung ohne Verbindungselement.

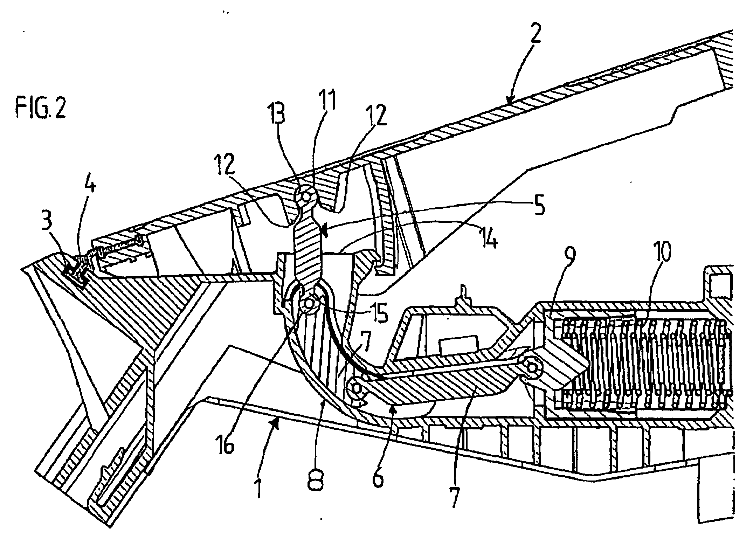

Wie aus Fig. 2 ersichtlich ist umfasst eine erfindungsgemäße Pedalvorrichtung eine Gehäuseeinheit 1 und eine Pedalplatte 2, die gelenkig miteinander verbunden sind. Für diese gelenkige Verbindung ist im in Fig. 2 linken Endbereich der Gehäuseeinheit eine Aufnahme 3 für ein mit der Pedalplatte 2 verbundenes gelenkiges oder flexibles Verbindungsteil 4 vorgesehen.

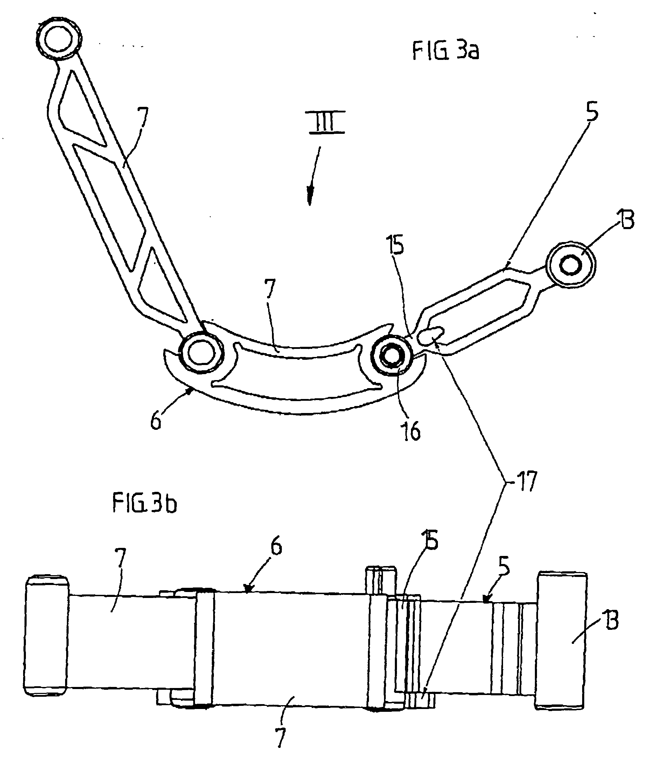

Die erfindungsgemäße Pedalvorrichtung umfasst weiterhin ein Verbindungselement 5, das mit der Pedalplatte 2 verrastet ist und eine Verbindung zwischen der Pedalplatte 2 und weiterhin von der Pedalvorrichtung umfassten Kraftübertragungsmitteln 6 herstellt. Die Kraftübertragungsmittel 6 sind als Gliederkette mit zumindest zwei gelenkig miteinander verbundenen Gliedern 7 ausgeführt (siehe dazu Fig. 3a und Fig. 3b). Die als Gliederkette ausgeführten Kraftübertragungsmittel 6 erstrecken sich durch einen Führungskanal 8 der Gehäuseeinheit 1, der einen gebogenen Verlauf aufweist, so dass die von der Pedalplatte 2 auf das Verbindungselement 5 und das erste Glied 7 der Gliederkette ausgeübte nach unten gerichtete Kraft in eine in Fig. 2 nach rechts gerichtete Kraft umgewandelt wird, die das in Fig. 2 rechte Glied 7 der Gliederkette auf einen Zylinder 9 ausübt. Dieser Zylinder 9 sitzt in einer entsprechenden Ausnehmung der Gehäuseeinheit 1 und ist gegen die Kraft einer Feder 10 bewegbar. Beispielsweise können die Bewegungen des Zylinders 9 mit einem entsprechenden Sensor detektiert werden.

Für die Rastverbindung zwischen Pedalplatte 2 und Verbindungselement 5 ist an der Unterseite der Pedalplatte 2 eine hohlzylinderabschnittsförmige nach unten offene Rastaufnahme 11 vorgesehen, an die sich von der Pedalplatte 2 abgewandten Seite Führungsrippen 12 anschließen, die sich ausgehend von der Rastaufnahme 11 und ausgehend von der Pedalplatte 2 derart voneinander weg erstrecken, dass eine im wesentlichen trichterförmige Aufnahme für ein der Rastaufnahme 11 entsprechendes an dem Verbindungselement 5 vorgesehenes Rastelement 13 entsteht. Das Rastelement 13 ist, wie dies aus Fig. 3a und Fig. 3b ersichtlich ist, im wesentlichen zylindrisch gestaltet, so dass es passend in die Rastaufnahme 11 einrasten kann.

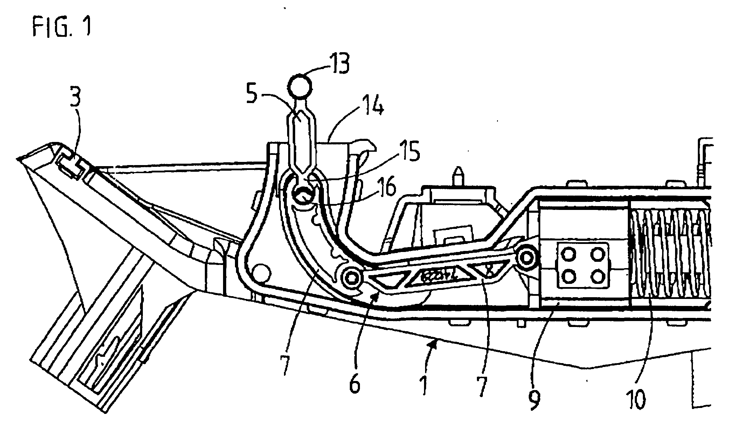

Der Führungskanal 8 endet, wie dies aus Fig. 1, Fig. 2 und Fig. 4 ersichtlich ist, kurz unterhalb einer oberen Öffnung 14 der Gehäuseeinheit 1, durch die hindurch das Verbindungselement 5 nach außen in Richtung auf die Pedalplatte 2 herausragen kann. Das Verbindungselement 5 ragt ein Stück weit mit einem endseitigen Hals 15 in den Führungskanal 8 hinein, wobei an dem Ende des endseitigen Halses 15 ein Kopf 16 für die gelenkige Verbindung mit dem Ersten der Glieder 7 der Gliederkette angeordnet ist. Im Bereich des Halses 15 ist an der Außenseite des Verbindungselementes 5 ein Führungsteil 17 angebracht. Aus Fig. 3a und Fig. 3b ist ersichtlich, dass das Führungsteil 17 eine nocken- oder nasenförmige Gestalt aufweist.

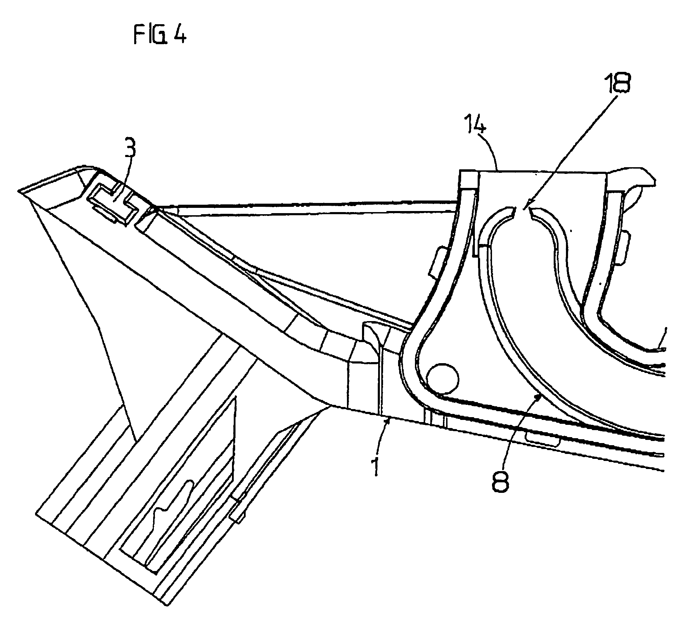

Aus Fig. 4 ist eine seitliche Ausnehmung 18 in dem seitlichen oberen Ende des Führungskanals 8 ersichtlich. Die Ausnehmung 18 entspricht hinsichtlich ihrer Anordnung und hinsichtlich ihrer Form und Größe dem Führungsteil 17, so dass in der in Fig. 1 dargestellten Position das Führungsteil 17 passend in die Ausnehmung 18 eingreift.

In der in Fig. 1 dargestellten Position ragt somit das Verbindungselement 5 im wesentlichen lagefixiert aus der oberen Öffnung 14 der Gehäuseeinheit 1 nach oben heraus. Auf diese Weise kann bei einer automatischen Aufbringung der Pedalplatte 2 auf die Gehäuseeinheit 1 gewährleistet werden, dass die Rastaufnahme 11 exakt in Eingriff mit dem Rastelement 13 des Verbindungselementes 5 gelangt. Diese Aufbringung der Rastaufnahme 11 auf das Rastelement 13 wird durch die Führungsrippen 12 erleichtert. Die bei dem Verrasten notwendige Gegenkraft wird beispielsweise durch die Feder 10 erzeugt. Falls hierbei die Rastkräfte größer sind als die Federkräfte, wird durch die Form des Führungskanals 8 und die Form des Verbindungselementes 5 sichergestellt, dass innere Anschläge des Verbindungselementes 5 in dem Führungskanal 8 auftreten, so dass dadurch eine Gegenkraft für das Verrasten erzeugt wird.

Erfindungsgemäß besteht die Möglichkeit, das Führungsteil an der Gehäuseeinheit 1 und eine entsprechende Ausnehmung an dem Verbundelement 5 anzuordnen. Mit einer derartigen Umkehrung lassen sich vergleichbare Vorteile erzielen.

### Bezugszeichenliste

- 1.: Gehäuseeinheit
- 2.: Pedalplatte
- 3.: Aufnahme für 4
- 4.: gelenkiges Verbindungsteil zwischen 1 und 2
- 5.: Verbindungselement
- 6.: Kraftübertragungsmittel (Gliederkette)
- 7.: Glieder von 6
- 8.: Führungskanal
- 9.: Zylinder
- 10.: Feder
- 11.: Rastaufnahme
- 12.: Führungsrippe
- 13.: Rastelement an 5
- 14.: obere Öffnung von 1
- 15.: Hals an 5
- 16.: Kopf an 15
- 17.: Führungsteil an 5
- 18.: Ausnehmung für 17

## Patentansprüche

1. Pedalvorrichtung eines Kraftfahrzeugs umfassend
- eine Pedalplatte (2), auf die seitens eines Benutzers Kraft ausgeübt werden kann,
- eine Gehäuseeinheit (1), an der die Pedalplatte (2) gelenkig befestigt ist,
- ein Verbindungselement (5), das mit Kraftübertragungsmitteln (6) im Innern der Gehäuseeinheit (1) verbunden ist und außerhalb der Gehäuseeinheit (1) mit der Pedalplatte (2) verbunden ist,
**dadurch gekennzeichnet, dass**
- an dem Verbindungselement (5) oder an der Gehäuseeinheit (1) ein Führungsteil (17) angebracht ist, und dass
- in der Gehäuseeinheit (1) oder in dem Verbindungselement (5) eine Ausnehmung (18) vorgesehen ist, in die das Führungsteil (17) eingreift,
- wodurch die Herstellung der Verbindung des Verbindungselementes (5) mit der Pedalplatte (2) erleichtert wird.

2. Pedalvorrichtung nach Anspruch 1, **dadurch gekennzeichnet, dass** die Verbindung zwischen Pedalplatte (2) und Verbindungselement (5) als Rastverbindung ausgeführt ist.

3. Pedalvorrichtung nach Anspruch 2, **dadurch gekennzeichnet, dass** an der Unterseite der Pedalplatte (2) eine Rastaufnahme (11) angeordnet ist, in die ein an dem Verbindungselement (5) angeordnetes Rastelement (13) eingreifen kann.

4. Pedalvorrichtung nach Anspruch 3, **dadurch gekennzeichnet, dass** an der Rastaufnahme (11) sich von dieser und voneinander wegerstreckende Führungsrippen (12) angeordnet sind, die ein Einbringen des Rastelementes (13) in die Rastaufnahme (11) erleichtern.

5. Pedalvorrichtung nach einem der Ansprüche 1 bis 4, **dadurch gekennzeichnet, dass** in der Gehäuseeinheit (1) ein Führungskanal (8) ausgebildet ist, in dem die Kraftübertragungsmittel (6) verlaufen.

6. Pedalvorrichtung nach Anspruch 5, **dadurch gekennzeichnet, dass** die Ausnehmung (18) für die Aufnahme des Führungsteils (17) im Bereich des oberen Endes des Führungskanals (8) angeordnet ist.

7. Pedalvorrichtung nach einem der Ansprüche 1 bis 6, **dadurch gekennzeichnet, dass** das Führungsteil (17) eine nocken- oder nasenförmige Gestalt aufweist.

8. Pedalvorrichtung nach einem der Ansprüche 1 bis 7, **dadurch gekennzeichnet, dass** das Führungsteil (17) seitlich an dem Verbindungselement (5) angebracht ist.

9. Pedalvorrichtung nach einem der Ansprüche 1 bis 8, **dadurch gekennzeichnet, dass** das Führungsteil (17) im Bereich des von dem Rastelement (13) abgewandten Drittels, insbesondere im Bereich des von dem Rastelement (13) abgewandten Endes des Verbindungselementes (5) angeordnet ist.

10. Pedalvorrichtung nach einem der Ansprüche 1 bis 9, **dadurch gekennzeichnet, dass** die Kraftübertragungsmittel (6) als Gliederkette ausgebildet sind, wobei das Verbindungselement (5) gelenkig mit einem der Glieder (7) der Kraftübertragungsmittel (6) verbunden ist.

## Claims

1. Pedal apparatus for a motor vehicle comprising
- a pedal plate (2) on which force can be applied by a user,
- a housing unit (1) to which the pedal plate (2) is attached in articulated manner,
- a connecting element (5) which is connected to force transmitting means (6) in the interior of the housing unit (1) and is connected outside the housing unit (1) to the pedal plate (2), **characterised in that**
- a guide member (17) is attached to the connecting element (5) or to the housing unit (1) and that
- provided in the housing unit (1) or in the connecting element (5) is a recess (18) in which the guide member (17) engages,
- whereby the manufacturing of the connection of the connecting element (5) to the pedal plate (2) is simplified.

2. Pedal apparatus according to claim 1, **characterised in that** the connection between the pedal plate (2) and the connecting element (5) is designed as a latching connection.

3. Pedal apparatus according to claim 2, **characterised in that** arranged on the underside of the pedal plate (2) is a latching receptacle (11) in which a latching element (13) arranged on the connecting element (5) can engage.

4. Pedal apparatus according to claim 3, **characterised in that** arranged on the latching receptacle (11) are guide ribs (12) extending away from it and from each other which simplify introduction of the latching element (13) into the latching receptacle (11).

5. Pedal apparatus according to one of the claims 1 to 4, **characterised in that** a guide channel (8) is formed in the housing unit (1), in which guide channel the force transmitting means (6) run.

6. Pedal apparatus according to claim 5, **characterised in that** the receptacle (18) for accommodating the guide member (17) is arranged in the region of the upper end of the guide channel (8).

7. Pedal apparatus according to one of the claims 1 to 6, **characterised in that** the guide member (17) has a cam-shaped or nose-shaped construction.

8. Pedal apparatus according to one of the claims 1 to 7, **characterised in that** the guide member (17) is laterally attached to the connecting element (5).

9. Pedal apparatus according to one of the claims 1 to 8, **characterised in that** the guide member (17) is arranged in the region of the third facing away from the latching element (13), in particular in the region of the end of the connecting,element (5) facing away from the latching element (13).

10. Pedal apparatus according to one of the claims 1 to 9, **characterised in that** the force transmitting means (6) are designed as a link chain, wherein the connecting element (5) is linked in articulated manner to one of the members (7) of the force transmitting means (6).

## Revendications

1. Dispositif de pédale pour un véhicule automobile, comprenant
- une pédale (2), sur lequel l'utilisateur peut appliquer une force,
- une unité de boîtier, (1), sur laquelle la pédale (2) est fixée de façon articulée,
- un élément de liaison (5) qui à l'intérieur de l'unité de boîtier (1) est relié à des moyens de transmission de force (6) et à l'extérieur de l'unité de boîtier (1) est relié à la pédale (2),
**caractérisé en ce que**
- un élément de guidage (17) est monté sur l'élément de liaison (5) ou sur l'unité de boîtier (1) et **en ce que**
- un évidement (18) dans lequel l'élément de guidage (17) s'engrène est prévu dans l'unité de boîtier (1) ou dans l'élément de liaison (5),
- ce qui facilite la création de la liaison entre l'élément de liaison (5) et la pédale (2).

2. Dispositif de pédale selon la revendication 1, **caractérisé en ce que** la liaison entre la pédale (2) et l'élément de liaison (5) est conçue sous la forme d'une liaison par enclenchement.

3. Dispositif de pédale selon la revendication 2, **caractérisé en ce qu'**un logement à enclenchement (11), dans lequel un élément d'enclenchement (13) disposé sur l'élément de liaison (5) peut s'engrener est disposé sur la face inférieure de la pédale (2).

4. Dispositif de pédale selon la revendication 3, **caractérisé en ce que** des nervures de guidage (12) s'éloignant du logement à enclenchement (11) et s'éloignant l'une de l'autre et facilitant l'insertion de l'élément d'enclenchement (13) dans le logement d'enclenchement (11) sont disposées sur le logement d'enclenchement (11).

5. Dispositif de pédale selon l'une quelconque des revendications 1 à 4, **caractérisé en ce qu'**une canalisation de guidage (8) dans laquelle s'étendent les moyens de transmission de force (6) est conçue sur l'unité de boîtier (1).

6. Dispositif de pédale selon la revendication 5, **caractérisé en ce que** l'évidement (18) pour le logement de l'élément de guidage (17) est disposé dans la zone de l'extrémité supérieure de la canalisation de guidage (8).

7. Dispositif de pédale selon l'une quelconque des revendications 1 à 6, **caractérisé en ce que** l'élément de guidage (17) a une conformation du type d'un ergot ou d'un tenon.

8. Dispositif de pédale selon l'une quelconque des revendications 1 à 7, **caractérisé en ce que** l'élément de guidage (17) est monté latéralement sur l'élément de liaison (5).

9. Dispositif de pédale selon l'une quelconque des revendications 1 à 8, **caractérisé en ce que** l'élément de guidage (17) est disposé dans la zone du tiers opposé à l'élément d'enclenchement (13), notamment dans la zone de l'extrémité de l'élément de liaison (5) qui est opposée à l'élément d'enclenchement (13).

10. Dispositif de pédale selon l'une quelconque des revendications 1 à 9, **caractérisé en ce que** les moyens de transmission de force (6) sont conçus sous la forme d'une chaîne à maillons, l'élément de liaison (5) étant relié de façon articulée avec l'un des maillons (7) des moyens de transmission de force (6).
